# EUROPÄISCHE PATENTANMELDUNG

(11) **EP 4 491 259 A1**
(43) Veröffentlichungstag der Anmeldung: **15.01.2025**
(21) Anmeldenummer: 24186416.4
(22) Anmeldetag: 04.07.2024
(51) Int. Cl.: B01D 53/34, B01D 53/00, B01D 53/72

(54) **ELEKTRISCH BEHEIZBARER OXIDATOR**

(30) Priorität: 10.07.2023 DE 102023118178
(71) Anmelder: Rotamill GmbH, 57076 Siegen (DE)
(72) Erfinder: Krumm, Eberhard, 57250 Netphen (DE); Parlak, Merih, 44793 Bochum (DE); Ströhmann, Maik, 35764 Sinn (DE)
(74) Vertreter: Kross, Ulrich

(57) **Zusammenfassung**

Die Erfindung betrifft eine Vorrichtung zur thermischen Behandlung von schadstoffhaltigem Prozessgas, vorzugsweise lösemittelhaltiger Prozessluft, umfassend wenigstens eine Rohgaskammer 1 zur Speicherung und Abgabe von schadstoffhaltigem Prozessgas, wenigstens eine Oxidationskammer 2 zur thermischen Behandlung des Prozessgases sowie wenigstens eine Reingaskammer 3 zur Speicherung des in der Oxidationskammer 2 thermisch behandelten Prozessgases, dadurch gekennzeichnet, dass eine mit der Oxidationskammer 2 wirkverbundene elektrische Heizung 4 dazu vorgesehen und ausgelegt ist, die Temperatur innerhalb der Oxidationskammer 2 auf einen vorab festgelegten Wert einzustellen und ggf. einzuregeln. Des Weiteren betrifft die Erfindung ein System aus einer Anlage, die schadstoffhaltige Prozessgase erzeugt, und wenigstens einer Vorrichtung gemäß der Erfindung.

## Beschreibung

### 1. Gebiet der Erfindung

Die Erfindung betrifft eine Vorrichtung zur thermischen Behandlung von schadstoffhaltigem Prozessgas, vorzugsweise lösemittelhaltiger Prozessluft, wie sie in Industrieanlagen Verwendung finden, die derartige schadstoffhaltigen Prozessgase erzeugen und gehalten sind, diese einerseits aus der Anlage abzuführen und andererseits so zu behandeln, dass vorab festgelegte Grenzwerte für den Gehalt an Schadstoffen in den Abgasen sicher unterschritten werden. Hierzu werden die aus der Anlage abgezogenen und schadstoffhaltigen Prozessgase üblicherweise thermisch nachbehandelt, wobei die in dem Prozessgas enthaltenen Schadstoffe zumindest zu einem wesentlichen Teil nachverbrannt werden und somit nicht mehr Teil der Schadstofflast des Abgases sind.

### 2. Stand der Technik

Derartige Vorrichtungen zur thermischen Behandlung von schadstoffhaltigem Prozessgas sind dem Fachmann hinlänglich bekannt. Sie umfassen üblicherweise eine Rohgaskammer zur Einleitung der schadstoffhaltigen Prozessgase, eine Oxidationskammer zur Umsetzung der Schadstoffe in dem Prozessgas und eine Reingaskammer zur Ausleitung des thermisch behandelten Prozessgases. Die bekannten Nachverbrennungsanlagen sind üblicherweise mit einer Erdgas-Brennereinrichtung ausgestattet, was einerseits dazu führt, dass durch den mittels der Erdgasbrennereinrichtung erzeugten Flammeintrag eine zusätzliche Stickoxidbildung eintreten kann und andererseits derartige Erdgasbrennereinrichtungen abhängig von der Verfügbarkeit der hierfür erforderlichen Brenngase, insbesondere Erdgas, sind. Die bekannten Vorrichtungen zur thermischen Behandlung von schadstoffhaltigem Prozessgas haben sich somit als nachteilig im Hinblick auf die Einhaltung bestimmter Grenzwerte, insbesondere Reingasgrenzwerte gemäß TA Luft, sowie im Hinblick auf den von der Verfügbarkeit von Brennstoffen abhängigen Dauerbetrieb erwiesen.

### 3. Aufgabe der Erfindung

Es war daher eine Aufgabe der Erfindung, eine Vorrichtung zur Verfügung zu stellen, die die aus dem Stand der Technik bekannten Nachteile nicht bereitstellt und einfach und kostengünstig betreibbar ist. Erfindungsgemäß wird diese Aufgabe gelöst mittels einer Vorrichtung, umfassend die Merkmale des Anspruchs 1, sowie eines Systems, umfassend die Merkmale des Anspruchs 11. Vorteilhafte Ausgestaltungen der Erfindung sind in den abhängigen Ansprüchen dargelegt

### 4. Zusammenfassung der Erfindung

Erfindungsgemäß weist gemäß einem ersten Aspekt der Erfindung die Vorrichtung zur thermischen Behandlung von schadstoffhaltigem Prozessgas, vorzugsweise lösemittelhaltiger Prozessluft, wenigstens eine Rohgaskammer zur Durchleitung und vorzugsweise Erwärmung von schadstoffhaltigem Prozessgas, wenigstens eine Oxidationskammer zur thermischen Behandlung des Prozessgases sowie wenigstens eine Reingaskammer zur Durchleitung und Wärmespeicherung des in der Oxidationskammer thermisch behandelten Prozessgases auf. Das üblicherweise aus einer Industrieanlage, die derartige schadstoffhaltigen Prozessgase erzeugt, abgezogene Prozessgas wird somit zuerst in eine Rohgaskammer geführt und dort gegebenenfalls erwärmt, anschließend vorzugsweise kontrolliert im Hinblick auf Menge, Volumenströme, Temperatur und/oder chemische Zusammensetzung in eine nachgeschaltete Oxidationskammer überführt, in der das schadstoffhaltige Prozessgas thermisch behandelt wird.

Diese thermische Behandlung erfolgt vorzugsweise so, dass wesentliche Anteile der Schadstoffe innerhalb des Prozessgases nach Abschluss der thermischen Behandlung nachverbrannt sind und somit nicht mehr als Schadstoffe innerhalb des Prozessgases aufgefasst werden können. Die thermische Behandlung von schadstoffhaltigem Prozessgas innerhalb der Oxidationskammer erfolgt entweder kontinuierlich oder chargenweise und führt zu einem thermisch behandelten Prozessgas, das aus der Oxidationskammer austretend in eine Reingaskammer zur Wärmespeicherung und gegebenenfalls kontrollierten Abgabe des thermisch behandelten Prozessgases überführt wird.

Erfindungsgemäß erfolgt die Erwärmung des schadstoffhaltigen Prozessgases innerhalb der Oxidationskammer auf eine zur thermischen Behandlung erforderliche Temperatur mittels einer elektrischen Heizung, die mit der Oxidationskammer wirkverbunden und dazu vorgesehen und ausgelegt ist, die Temperatur innerhalb der Oxidationskammer auf einen vorab festgelegten Wert einzustellen und gegebenenfalls auch einzuregeln. Die elektrische Heizung ist im erfindungsgemäßen Sinne eine solche, die mit der Oxidationskammer zwar wirkverbunden, jedoch nicht innerhalb der Oxidationskammer selbst angeordnet ist. Dies kann beispielsweise durch eine Anordnung der elektrischen Heizung direkt anschließend an die Oxidationskammer oder zumindest in deren direkter Nähe oder verbunden über eine thermisch isolierte Leitung, umgesetzt werden. Die elektrische Heizung erwärmt das innerhalb der Oxidationskammer vorliegende schadstoffhaltige Prozessgas dann entweder konvektiv und/oder mittels Strahlungswärme und/oder mittels Durchleitung eines geeigneten Wärmeträgers wie beispielsweise eines Frischluftstroms durch die elektrische Heizung hindurch und in die Oxidationskammer hinein. In jedem Fall nutzt die Erfindung Strom als Primärenergiequelle, um die Temperatur innerhalb der Oxidationskammer, insbesondere des innerhalb der Oxidationskammer vorliegenden oder diese durchströmenden schadstoffhaltigen Prozessgases, auf eine zur thermischen Behandlung notwendige Mindesttemperatur oder ein hierfür vorgesehenes Temperaturfenster.

Mittels der Erfindung kann somit sichergestellt werden, dass die Wärmeeinbringung mit Strom als Primärenergiequelle erfolgt und diese Wärmeeinbringung ohne Erzeugung einer Flamme zum Wärmeeintrag erfolgt. Eine zusätzliche Stickoxidbildung kann somit unterbunden oder zumindest auf das unvermeidbare Minimum beschränkt werden. Darüber hinaus ist erfindungsgemäß eine gänzliche Unabhängigkeit hinsichtlich der Brenngas-Verfügbarkeit, insbesondere von Erdgas, erreicht. Besonders vorteilhaft ist die Erfindung dann umsetzbar, wenn kein direkter Kontakt der Elektroheizung mit dem schadstoffhaltigen Prozessgas erreicht wird, so dass keine negativen Einflüsse, insbesondere korrosive oder chemische Einflüsse, des Prozessgases auf die elektrische Heizung zu erwarten sind.

Bevorzugt wird, wenn die elektrische Heizung außen an der Oxidationskammer angeordnet ist oder zumindest über eine Leitung mit der Oxidationskammer verbunden ist. Hierdurch wird durch einfache Mittel sichergestellt, dass kein direkter Kontakt zwischen der elektrischen Heizung und dem schadstoffhaltigen Prozessgas erfolgt.

Bevorzugt wird überdies, wenn die elektrische Heizung dazu ausgelegt und eingerichtet ist, die Temperatur innerhalb der Oxidationskammer, vorzugsweise des innerhalb der Oxidationskammer vorliegenden Prozessgases, auf eine Temperatur oberhalb von 800°C, vorzugsweise oberhalb von 820°C, insbesondere zwischen 820°C und 900°C einzustellen. Hierdurch wird sichergestellt, dass die üblicherweise zur Einhaltung von Grenzwerten der zu beachtenden Schadstoffe erforderlichen Nachverbrennungstemperaturen sicher erreicht werden.

Bevorzugt wird überdies, wenn die Rohgaskammer mit einem Wärmetauscher, vorzugsweise seinem regenerativen Wärmetauscher, wirkverbunden ist, um das schadstoffhaltige Prozessgas auf eine vorab festgelegte Vorerwärmungstemperatur aufzuheizen. Hierdurch wird einerseits verfügbare Wärme zur Vorerwärmung des Prozessgases benutzt, was ein energieeffizienteres Betreiben der Vorrichtung insgesamt ermöglicht, und andererseits die nachgeschaltete elektrische Heizung zur Erwärmung des schadstoffhaltigen Prozessgases auf die zur thermischen Behandlung erforderliche Nachverbrennungstemperatur entlastet wird.

Bevorzugt wird, wenn die Temperatur und Atmosphäre innerhalb der Oxidationskammer so eingestellt und vorzugsweise eingeregelt werden, dass eine Oxidation zumindest von 90 % der Schadstoffe innerhalb des Prozessgases, vorzugsweise von wenigstens 95 % der Schadstoffe, erreichbar ist. Hierdurch wird eine Vorrichtung geschaffen, die ein dauerhaftes und sicheres Unterschreiten vorab festgelegter Schadstoffgrenzwerte im Abgas der Vorrichtung und der mit der Vorrichtung versehenen Anlage ermöglicht.

Bevorzugt wird in diesem Zusammenhang, wenn eine Ausleitung des Prozessgases aus der Oxidationskammer in die Einlasskammer hinein erst nach Unterschreiten vorab festgelegter Grenzwerte für die Schadstoffe im Prozessgas und/oder nach einer vorab festgelegten Aufenthaltsdauer des Prozessgases innerhalb der Oxidationskammer erfolgt. Auch diese vorteilhafte Ausgestaltung der Erfindung dient dem Zweck, einen sicheren und dauerhaften Betrieb der Vorrichtung mit einfachen Mitteln sicherzustellen. Bevorzugt wird, wenn bei Vorsehen einer Regelung für die Temperatur innerhalb der Oxidationskammer auch eine geeignete Sensorik für die Bestimmung einer Temperaturverteilung innerhalb der Oxidationskammer und/oder zur Messung chemischer Parameter des Prozessgases vorgesehen sind.

Bevorzugt wird überdies, wenn die im thermisch behandelten Prozessgas gespeicherte Wärme über einen Wärmetauscher, vorzugsweise einen mit der Reingaskammer wirkverbundenen Wärmetauscher, zumindest teilweise, vorzugsweise zu mindestens 90%, insbesondere zu wenigstens 90 % aus dem thermisch behandelten Prozessgas abführbar ist. Im erfindungsgemäßen Sinne wird die anteilsmäßige Abfuhr von Wärme anhand der Reingastemperatur und verglichen mit der Umgebungstemperatur bestimmt. Bei einer Eintrittstemperatur des thermisch behandelten Prozessgases in die Reingaskammer von beispielsweise 820°C und einer Umgebungstemperatur von beispielsweise 20°C und einem sich daraus errechnenden Temperaturdelta von 800 K wäre eine 90%ige Wärmeabfuhr mittels des Wärmetauschers dann gegeben, wenn das Prozessgas innerhalb der Reingaskammer nach Kontakt mit dem Wärmetauscher eine Resttemperatur von 100°C aufwiese. Bevorzugt wird selbstverständlich eine dauerhaft deutlich höhere Wärmeabfuhr aus dem thermisch behandelten Prozessgas über den mit der Reingaskammer wirkverbundenen Wärmetauscher.

Bevorzugt wird überdies, wenn die erfindungsgemäße Vorrichtung genau eine Rohgaskammer und genau eine Oxidationskammer sowie genau eine Reingaskammer aufweist.

Gemäß einem weiteren Aspekt der Erfindung wird zudem ein System aus einer Anlage, die schadstoffhalte Prozessgase, vorzugsweise lösemittelhaltige Prozessluft, erzeugt und wenigstens einer Vorrichtung gemäß dem ersten Aspekt der Erfindung zur Verfügung gestellt. Die erfindungsgemäße Vorrichtung gemäß dem ersten Aspekt der Erfindung lässt sich ohne Weiteres in bestehende Anlagen integrieren, sei es durch Austausch bestehender Oxidationsvorrichtungen oder aber den erstmaligen Einbau, wobei mit dem erfindungsgemäßen System die gleichen technischen Effekte und Vorteile erreichbar sind wie mit der erfindungsgemäßen Vorrichtung gemäß dem ersten Aspekt der Erfindung.

Bevorzugt wird, wenn die Vorrichtung dazu ausgelegt und eingerichtet ist, die Prozessgase derart thermisch zu behandeln, dass vorgegebene Grenzwerte an organischem Kohlenstoff und/oder Kohlenmonoxid und/oder Stickoxiden in dem behandelten Prozessgas unterschritten werden.

Bevorzugt wird überdies, wenn der Wärmetauscher zur Wiedergewinnung der Wärme aus dem thermisch behandelten Prozessgas mit dem Wärmetauscher zur Aufheizung des schadstoffhaltigen Prozessgases auf eine Vorerwärmungstemperatur wirkverbunden oder gar identisch ist. In beiden Fällen kann die aus dem thermisch behandelten Abgas wiedergewonnene Wärme regenerativ im Prozess genutzt werden, was einen besonders energieeffizienten Betrieb der Vorrichtung zur thermischen Behandlung von schadstoffhaltigem Prozessgas oder des gesamten erfindungsgemäßen Systems aus Industrieanlage und Vorrichtung ermöglicht.

### 5. Kurze Beschreibung der Figur

Die erfindungsgemäße Vorrichtung wird nachfolgend unter Bezugnahme auf eine figürliche Darstellung näher erläutert.

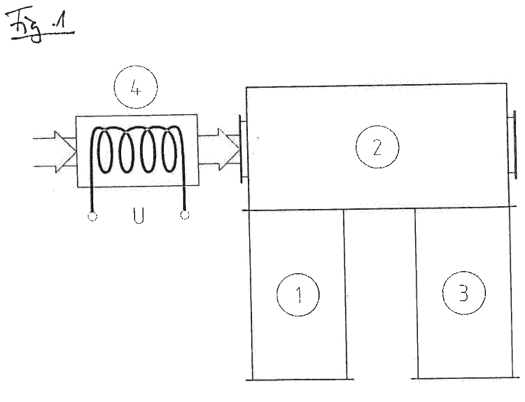

- Figur 1: zeigt eine schematische Prinzipsskizze einer erfindungsgemäßen Vorrichtung zur thermischen Behandlung von schadstoffhaltigem Prozessgas.

### 6. Detaillierte Beschreibung der Figur

Figur 1 zeigt eine Prinzipsskizze einer erfindungsgemäßen Vorrichtung zur thermischen Behandlung von schadstoffhaltigem Prozessgas, umfassend eine Rohgaskammer 1, in der aus einer (nicht dargestellten) Industrieanlage stammende schadstoffhaltige Prozessgase hindurchgeführt und vorzugsweise vorgeheizt werden und anschließend in eine Oxidationskammer 2 übergeben werden, in der die schadstoffhaltigen Prozessgase thermisch so lange und so intensiv behandelt werden, dass sie die Reingaswerte gemäß TA Luft einhalten und anschließend in eine Reingaskammer 3 abgegeben werden können. Neben der Oxidationskammer 2 ist eine elektrische Heizung 4 vorgesehen, über die geeignete Prozessmedien wie beispielsweise schadstoffunbelastete Luft von außen durch die elektrische Heizung 4 hindurch und dann auf eine vorab festgelegte Temperatur erwärmt in die Oxidationskammer 2 hineingeführt werden. Hierdurch wird gewährleistet, dass kein Kontakt zwischen der elektrischen Heizung 4 und dem schadstoffhaltigen Prozessgas innerhalb der Oxidationskammer 2 erfolgt. Gleichzeitig wird sichergestellt, dass sowohl die Temperatur als auch die Atmosphäre innerhalb der Oxidationskammer 2 geeignet für eine wirkungsvolle thermische Nachbehandlung des schadstoffhaltigen Prozessgases innerhalb der Oxidationskammer 2 sind. Nicht dargestellt ist ein Wärmetauscher, der sowohl mit der Reingaskammer 3 als auch der Rohgaskammer 1 verbunden ist und so ausgelegt und eingerichtet ist, dass er wesentliche Wärmemengen aus dem thermisch nachbehandelten Prozessgas innerhalb der Reingaskammer abziehen und zur Erwärmung des schadstoffhaltigen Prozessgases in der Rohgaskammer nutzen kann. Hierdurch wird dem Prinzip der regenerativen Energienutzung innerhalb der erfindungsgemäßen Vorrichtung besonders Rechnung getragen.

### Bezugszeichenliste

- 1: Rohgaskammer
- 2: Oxidationskammer
- 3: Reingaskammer
- 4: Elektrische Heizung

## Patentansprüche

1. Vorrichtung zur thermischen Behandlung von schadstoffhaltigem Prozessgas, vorzugsweise lösemittelhaltiger Prozessluft, umfassend wenigstens eine Rohgaskammer (1) zur Durchleitung und vorzugsweise Wärmespeicherung von schadstoffhaltigem Prozessgas, wenigstens eine Oxidationskammer (2) zur thermischen Behandlung des Prozessgases sowie wenigstens eine Reingaskammer (3) zur Wärmespeicherung und Durchleitung des in der Oxidationskammer (2) thermisch behandelten Prozessgases, **dadurch gekennzeichnet, dass** eine mit der Oxidationskammer (2) wirkverbundene elektrische Heizung (4) dazu vorgesehen und ausgelegt ist, die Temperatur innerhalb der Oxidationskammer (2) auf einen vorab festgelegten Wert einzustellen und ggf. einzuregeln.

2. Vorrichtung nach Anspruch 1, **dadurch gekennzeichnet, dass** die elektrische Heizung (4) außen an der Oxidationskammer (2) angeordnet ist oder zumindest über eine Leitung (5) mit der Oxidationskammer (2) verbunden ist.

3. Vorrichtung nach einem der voranstehenden Ansprüche, **dadurch gekennzeichnet, dass** die elektrische Heizung (4) Strom als Primärenergiequelle nutzt und die Temperatur innerhalb der Oxidationskammer (2) flammfrei erwärmt.

4. Vorrichtung nach einem der voranstehenden Ansprüche, **dadurch gekennzeichnet, dass** die elektrische Heizung (4) keinen Kontakt mit dem Prozessgas, insbesondere mit dem Prozessgas innerhalb der Oxidationskammer (2), aufweist.

5. Vorrichtung nach einem der voranstehenden Ansprüche, **dadurch gekennzeichnet, dass** die elektrische Heizung (4) dazu ausgelegt und eingerichtet ist, die Temperatur innerhalb der Oxidationskammer (2), vorzugsweise des innerhalb der Oxidationskammer (2) vorliegenden Prozessgases, auf eine Temperatur oberhalb von 800 °C, vorzugsweise oberhalb von 820 °C, insbesondere zwischen 820 °C und 900 °C, einzustellen.

6. Vorrichtung nach einem der voranstehenden Ansprüche, **dadurch gekennzeichnet, dass** die Rohgaskammer (1) mit einem Wärmetauscher, vorzugsweise einem regenerativen Wärmetauscher, wirkverbunden ist, um das schadstoffbelastete Prozessgas auf eine vorab festgelegte Vorerwärmungstemperatur aufzuheizen.

7. Vorrichtung nach einem der voranstehenden Ansprüche, **dadurch gekennzeichnet, dass** die Temperatur und Atmosphäre innerhalb der Oxidationskammer (2) so eingestellt und vorzugsweise eingeregelt werden, dass eine Oxidation zumindest von 90 % der Schadstoffe innerhalb des Prozessgases, vorzugsweise von wenigstens 95 % der Schadstoffe, erreichbar ist.

8. Vorrichtung nach einem der voranstehenden Ansprüche, **dadurch gekennzeichnet, dass** eine Ausleitung des Prozessgases aus der Oxidationskammer (2) in die Reingaskammer (3) hinein erst nach Unterschreiten vorab festgelegter Grenzwerte für die Schadstoffe im Prozessgas und/oder nach einer vorab festgelegten Aufenthaltsdauer des Prozessgases innerhalb der Oxidationskammer (2) erfolgt.

9. Vorrichtung nach einem der voranstehenden Ansprüche, **dadurch gekennzeichnet, dass** die im thermisch behandelten Proessgas gespeicherte Wärme über einen Wärmetauscher, vorzugsweise einen mit der Reingaskammer (3) wirkverbundenen Wärmetauscher, zumindest teilweise, vorzugsweise zu wenigstens 80 %, insbesondere zu wenigstens 90 %, aus dem thermisch behandelten Prozessgas abführbar ist.

10. Vorrichtung nach einem der voranstehenden Ansprüche, **dadurch gekennzeichnet, dass** sie genau eine Rohgaskammer (1) und genau eine Oxidationskammer (2) sowie genau eine Reingaskammer (3) aufweist.

11. System aus einer Anlage, die schadstoffhaltige Prozessgase, vorzugsweise lösemittelhaltige Prozessluft, erzeugt und wenigstens einer Vorrichtung nach einem der voranstehenden Ansprüche.

12. System nach Anspruch 11, **dadurch gekennzeichnet, dass** die Vorrichtung dazu ausgelegt und eingerichtet ist, die Prozessgase derart thermisch zu behandeln, dass vorgegebene Grenzwerte an organischem Kohlenstoff und/oder Kohlenmonoxid und/oder Stickoxiden in dem behandelten Prozessgas unterschritten werden.

13. System nach einem der Ansprüche 11 oder 12, **dadurch gekennzeichnet, dass** der Wärmetauscher zur Wiedergewinnung der Wärme aus dem thermisch behandelten Prozessgas mit dem Wärmetauscher zur Aufheizung des schadstoffhaltigen Prozessgases auf eine Vorerwärmungstemperatur wirkverbunden oder identisch ist.
